# EUROPÄISCHE PATENTSCHRIFT

(11) **EP 0 649 367 B1**
(45) Veröffentlichungstag und Bekanntmachung des Hinweises auf die Patenterteilung: **15.05.1996**
(21) Anmeldenummer: 93915816.8
(22) Anmeldetag: 06.07.1993
(51) Int. Cl.: B27K 5/00, B27K 3/00, A62D 3/00, B09B 5/00

(54) **VERFAHREN UND ANLAGE ZUM ENTSORGEN VON MIT GIFTIGEN STOFFEN BEHANDELTEM HOLZ**
PROCESS AND PLANT FOR THE DISPOSAL OF TIMBER TREATED WITH TOXIC SUBSTANCES
PROCEDE ET INSTALLATION POUR SE DEBARRASSER DU BOIS TRAITE PAR DES MATIERES TOXIQUES

(30) Priorität: 06.07.1992 AT 1375/92
(43) Veröffentlichungstag der Anmeldung: 26.04.1995
(73) Patentinhaber: BANKHAMER, Doris, A-1100 Wien (AT); BANKHAMER, Alfred, A-1160 Wien (AT); Zeman, Gerhard, A-5400 Hallein (Salzburg) (AT); SEYR, Helmut, A-5302 Henndorf (AT); WURST, Maria, A-4493 Wolfern (AT)
(72) Erfinder: BANKHAMER, Doris, A-1100 Wien (AT); BANKHAMER, Alfred, A-1160 Wien (AT); Zeman, Gerhard, A-5400 Hallein (Salzburg) (AT); SEYR, Helmut, A-5302 Henndorf (AT); WURST, Maria, A-4493 Wolfern (AT)
(74) Vertreter: Haft, von Puttkamer, Berngruber, Czybulka
(86) Internationale Anmeldenummer: EP9301751
(87) Internationale Veröffentlichungsnummer: WO9401260

(56) Entgegenhaltungen:
- EP-A- 0 298 951
- DE-A- 4 114 178
- DE-C- 334 307
- FR-A- 2 332 364
- US-A- 1 328 505
- US-A- 4 645 536
- CHEMICAL ABSTRACTS, vol. 88, n 22 Columbus, Ohio, US abstract n 154554n
- DATABASE WPI Week 8423, Derwent Publications Ltd, London GB; AN 84-142801

## Beschreibung

Um die Lebensdauer des Holzes zu verlängern, wird es mit Holzschutzmitteln behandelt. Die Holzschutzmittel lassen sich im wesentlichen in zwei Gruppen aufteilen, nämlich in anorganische Verbindungen, insbesondere Salze und organische, insbesondere ölartige Verbindungen. Als Salze werden häufig Schwermetallsalze, insbesondere Kupfer-, Chrom- und Quecksilbersalze verwendet, ferner Fluoride und Boride. Die ölartigen Verbindungen enthalten im allgemeinen Teeröle, die reich an phenolischen Verbindungen sind. Daneben werden seit Jahrzehnten in großem Umfang polychlorierte Kohlenwasserstoffe verwendet. Das Holzschutzmittel kann ein Imprägniermittel oder ein Anstrichstoff sein.

Holzschutzmittel sind biozid und damit meistens hoch giftig. Holz, das mit Holzschutzmitteln behandelt worden ist, muß daher nach den heutigen gesetzlichen Vorschriften entsorgt werden. Dazu wird es heutzutage entweder Sondermülldeponien zugeführt oder unter Abgasreinigung verbrannt, wobei die giftigen Rückstände, die bei der Abgasreinigung anfallen, ebenfalls Sondermülldeponien zuzuführen sind.

Die Entsorgung einer Tonne Holz kostet daher gegenwärtig etwa Tausend DM. Berücksichtigt man dabei, daß allein in Oberösterreich mit einer Bevölkerung von etwa einer Million jährlich 200 000 t Holz zu entsorgen sind, wird deutlich, wie groß das Bedürfnis nach einem kostengünstigen Verfahren zur Holzentsorgung ist.

Ein Verfahren, bei dem Holzschutzmittel aus dem Holz enfernt werden, ist in EP-A-0 298 951 beschrieben.

Aufgabe der Erfindung ist es daher, die Kosten für die Entsorgung von chemisch behandeltem Holz wesentlich zu reduzieren.

Dies wird erfindungsgemäß mit einem Verfahren erreicht, bei dem die giftigen Stoffe, also insbesondere Holzschutzmittel, aus dem Holz wieder entfernt werden.

Das heißt, nach der Erfindung wird das Holz zerkleinert, eine erwärmte Suspension aus Wasser, einem wasserlöslichen organischen Lösungsmittel mit einem niedrigeren Siedepunkt als Wasser und dem zerkleinertem Holz wird in einer Zentrifuge zentrifugiert, das Gemisch aus Wasser und Lösungsmittel wird anschließend aus der Zentrifuge abgezogen und nach Abscheidung von in ihm enthaltenen giftigen Stoffen im Kreislauf der Zentrifuge zur Bildung einer Suspension aus Wasser, Lösungsmittel und dem in der Zentrifuge abgeschiedenen Holz wieder zugeführt. Die Suspension wird erneut zentrifugiert. Dieser Vorgang wird so oft wiederholt, bis die giftigen Stoffe aus dem Holz extrahiert worden sind. Anschließend wird das in der Zentrifuge abgeschiedene, von giftigen Stoffen befreite Holz aus der Zentrifuge ausgebracht.

Das Gemisch aus Wasser und organischem Lösungsmittel wird zum Abscheiden der in ihm enthaltenen giftigen Stoffe gekühlt, um Salze abzuscheiden, und anschließend das organische Lösungsmittel abdestilliert, um die organischen Stoffe, also insbesondere die ölartigen und polychlorierte Kohlenwasserstoffe, die einen wesentlich höheren Siedepunkt als das organische Lösungsmittel aufweisen und in Wasser nicht oder nur wenig löslich sind, abzuscheiden.

Das nach dem erfindungsgemäßen Verfahren von giftigen Stoffen befreite Holz kann problemlos entsorgt werden, also z.B. als Heizmaterial eingesetzt oder auf eine normale Deponie gegeben werden. Es kann aber auch wiederverwendet werden, beispielsweise zur Herstellung von Papier oder Pappe. Das heißt, das erfindungsgemäße Verfahren dient auch zum Wiederverwendbarmachen von chemisch behandeltem Holz.

Zur Herstellung der Holzsuspension muß das zu entsorgende Holz zunächst zerkleinert werden. Dazu können herkömmliche, in der Papierindustrie verwendete Mahl- und sonstige Zerkleinerungsmaschinen eingesetzt werden, beispielsweise Holländer.

Um die Salze sowie die organischen Holzschutzmittel, also insbesondere die ölartigen Holzschutzmittel und die polychlorierten Kohlenwasserstoffe, aber auch andere organische Stoffe, beispielsweise Anstrichstoffe, aus dem Holz zu extrahieren, wird das Holz in der Zentrifuge mit einem Gemisch aus Wasser und dem organischen Lösungsmittel behandelt, das, um es anschließend vom Wasser destillativ abtrennen zu können, einen niedrigeren Siedepunkt als Wasser besitzt.

Als organisches Lösungsmittel ist Aceton geeignet, ebenso Alkohole, also insbesondere Methyl-, Ethyl- oder Propylalkohol. Dabei kann es sich um binäre Gemische handeln, also z.B. Wasser und Aceton, jedoch sind auch ternäre und kompliziertere Gemische mit mehreren organischen Lösungsmitteln möglich. Das volumenverhältnis des Wassers zum organischen Lösungsmittel kann zwichen 10:1 und 1:10 schwanken, im allgemeinen dürfte es bei 2:1 bis 1:2 liegen.

In der Zentrifuge werden die Holzteilchen ausgelaugt, um die Holzschutzmittel u.dgl. giftigen Stoffe zu extrahieren. Dazu läuft die Zentrifuge vorzugsweise zunächst langsam um, wobei sie, ähnlich wie eine Waschmaschine, ihre Drehrichtung periodisch ändert. Vorteilhafterweise wird die Suspension in der Zentrifuge zugleich erwärmt, vorzugsweise auf 80 bis 100° C. Dazu kann die Zentrifuge mit einer Heizeinrichtung versehen sein. Die Extraktion der Holzteilchen wird weiterhin verstärkt, wenn die Suspension in der Zentrifuge unter Überdruck steht. An die Extraktion schließt sich die Zentrifugierung der Suspension an.

Nach der Erfindung wird das zum Extrahieren des Holzes verwendete Gemisch aus Wasser und organischem Lösungsmittel gereinigt, worauf das Wasser und das organische Lösungsmittel der Zentrifuge wieder zugeführt werden ,um das Holz erneut zu extrahieren, das sich nach dem Zentrifugieren als Kuchen an der Trommelwand der Zentrifuge abgeschieden hat. Diese Extraktion wird so oft wiederheit, bis die giftigen Stoffe aus dem Holz entfernt worden sind. Danach wird das Holz aus der Zentrifuge, z.B. durch Ausschwemmen mit Wasser, ausgebracht.

Bei dem erfindungsgemaßen Verfahren wird also das organische Losungsmittel vollstandig in einen geschlossenen Kreislauf geführt, d.h., es gelangt kein organisches Lösungsmittel nach außen. Wenn das Holz der Zentrifuge in Form von Pulpe zugeführt wird, fällt als Wasser lediglich das Pulpenwasser an, das jedoch relativ sauber ist, also keiner Sonderbehandlung bedarf, sondern wie anderes Brauchwasser auch, beispielsweise einer Kläranlage zugeführt werden kann. Das übrige Wasser wird ebenfalls vollständig in einen geschlossenen Kreislauf geführt.

Das Verhältnis des Wassers zum Holz in der Pulpe beträgt im allgemeinen 1 bis 10, vorzugsweise 2 bis 5 Gewichtsteile Wasser pro Gewichtsteil Holz.

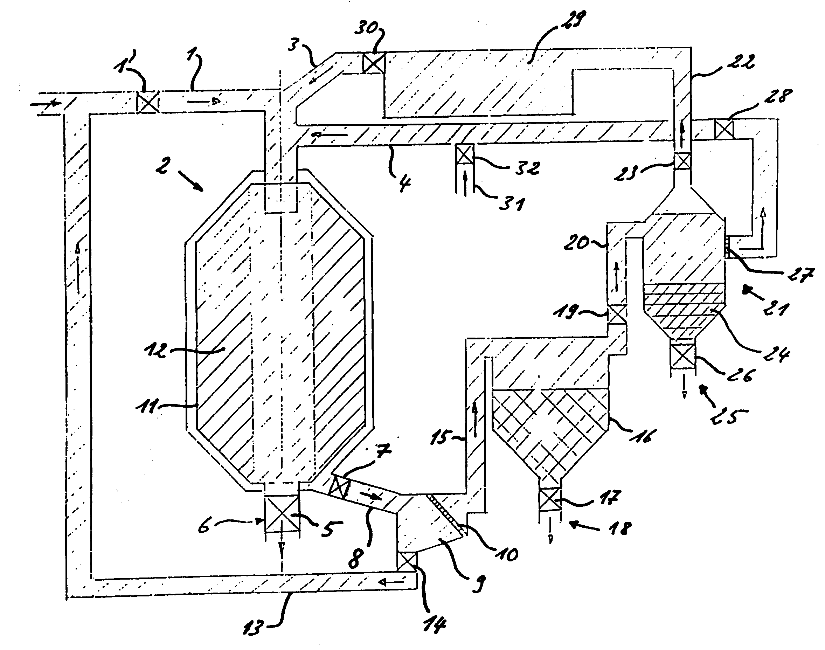

Nachstehend ist eine Ausführungsform einer Anlage zur Durchführung des erfindungsgemäßen Verfahrens anhand der Zeichnung näher beschrieben, die ein Fließschema der Anlage wiedergibt.

Danach wird über eine Leitung 1, die z.B. an einen nicht dargestellten Holländer angeschlossen ist, Pulpe, also eine wässrige Suspension feiner Holzteilchen einer Zentrifuge 2 zugeführt, die eine nicht dargestellte Heizeinrichtung aufweist. In der Leitung 1 ist ein Absperrorgan 1', beispielsweise ein Ventil, vorgesehen. Stromabwärts vom Absperrorgan 1' münden eine Leitung 3 und eine Leitung 4 in die Zufuhrleitung 1. Über die Leitung 3 wird Aceton zugeführt und über die Leitung 4 Wasser. Am unteren Ende der Zentrifuge 2 ist ein mit einem Absperrorgan 5 verschließbarer Auslaß 6 angeschlossen.

Ferner führt eine mit einem Absperrorgan 7 verschließbare Leitung 8 zu einer Filterkammer 9 mit einem Filter 10.

Die Zentrifuge 2 weist eine Trommel 11 auf, an der sich beim Zentrifugieren der Holzsuspension das Holz 12 unter Bildung eines Hohlraumes im Bereich der Drehachse abscheidet.

Über die Leitung 8 wird das Gemisch aus Wasser und Aceton nach dem Zentrifugieren abgezogen. Holzteilchen in dem Wasser/Aceton-Gemisch, die von der Zentrifuge 2 nicht zurückgehalten worden sind, scheiden sich am Filter 10 ab, der entsprechend kleine Filterporen aufweist.

Stromaufwärts von dem Filter 10 ist an die Filterkammer 9 eine Leitung 13 angeschlossen, die zur Leitung 1 führt. In der Leitung 13 ist ein Absperrorgan 14 vorgesehen. Wenn sich auf dem Filter 10 ein Filterkuchen aus feinen Holzteilchen gebildet hat, kann dieser beispielsweise durch Zufuhr von Wasser aus der Leitung 8 in die Leitung 13 geschwemmt werden, wodurch die Holzteilchen über die Leitung 1 zurück zur Zentrifuge 2 gelangen.

Im Normalfall, also wenn der Filter 10 ausreichend durchlässig ist, wird das Gemisch aus Wasser und Aceton über die Leitung 15 einem Absetzbehälter 16 zugeführt. Der Absetzbehälter 16 weist eine nicht dargestellte Kühleinrichtung auf, um das Wasser/Aceton-Gemisch zu kühlen. Die Kühlung des Wasser/Aceton-Gemischs kann auch bereits vor dem Absetzbehälter 16 erfolgen. Durch das Kühlen wird die Löslichkeit der Salze abgesetzt, so daß sich die Kupfer-, Chrom- u.dgl. Schwermetalle im Absetzbehälter 16 abscheiden. Sie können über den mit einem Absperrorgan 17 versehenen Auslaß 18 ausgebracht werden. Das ausgebrachte Salzgemisch kann ggf. nach bekannten Verfahren in die Schwermetalle aufgetrennt werden, die dann wiederverwendbar sind.

Nach Entfernen der Schwermetallsalze wird das Wasser/Aceton-Gemisch über die mit einem Absperrorgan 19 versehene Leitung 20 einer Destillationseinrichtung 21 zugeführt, in welcher das Aceton abdestilliert wird. Das verdampfte Aceton geht über eine Leitung 22 mit einem Absperrorgan 23 ab.

Durch die destillative Abtrennung des Acetons vom Wasser scheiden sich in der Destillationseinrichtung 21 die ölartigen und sonstigen in Wasser nicht oder nur wenig lösbaren organischen Verbindungen ab. Der gebildete Sumpf 24 in der Destillationseinrichtung 21 kann über den Auslaß 25 mit dem Absperrorgan 26 ausgebracht werden. Das Wasser strömt nach Passieren eines Filters 27 aus der Destillationseinrichtung 21 in die Leitung 4, die vor ihrer Einmündung in die Leitung 1 mit einem Absperrorgan 28 versehen ist.

Das abdestillierte Aceton wird nach Kondensation dem Vorratsbehälter 29 zugeführt, an dem die mit einem Absperrorgan 30 versehene Leitung 3 angeschlossen ist.

Ferner ist ein Anschluß 31 mit einem Absperrorgan 32 an die Leitung 4 angeschlossen, über den Frischwasser zugeführt werden kann, insbesondere um das gereinigte Holz 12 aus der Zentrifuge 2 herauszuspülen.

Die Kühlung des Wasser/Aceton-Gemischs in dem Absetzbehälter 16 erfolgt durch den Kälteteil einer nicht dargestellten Wärmepumpe, deren Wärmeteil die Heizeinrichtung der Zentrifuge 2 und/oder der Destillationseinrichtung 21 versorgt. Die Wärmepumpe kann mit einem Verbrennungsmotor betrieben werden, dessen Abwärme dann ebenfalls den erwähnten Heizeinrichtungen zugeführt wird.

Der in der Destillationseinrichtung 21 abgeschiedene organische Rückstand stellt das einzige zu entsorgende Produkt der erfindungsgemäßen Anlage dar.

Die erfindungsgemäße Anlage arbeitet folgendermaßen:
Die beispielsweise in einem Holländer erzeugte Pulpe in der Leitung 1 wird der Zentrifuge 2 zugeführt. Alsdann wird zentrifugiert, wodurch sich das Holz 12 an der Trommel 11 abscheidet. Das Pulpenwasser wird beispielsweise über den Auslaß 6 abgezogen. Alsdann wird über die Leitung 3 Aceton und über die Leitung 4 Wasser in die Zentrifuge 2 gegeben. Die Zentrifuge 2 läuft dann unter periodischem Richtungswechsel langsam um, wodurch eine Suspension aus Wasser, Aceton und dem abgeschiedenen Holz 12 gebildet wird. Die Suspension wird erwärmt, um die giftigen Stoffe mit dem Wasser/Aceton-Gemisch aus den Holzteilchen zu extrahieren. Alsdann wird zentrifugiert, wodurch sich das Holz 12 an der Trommelwand 11 abscheidet. Das Wasser/Aceton-Gemisch wird anschließend über die Leitung 8 aus der Zentrifuge 2 abgezogen und gereinigt.

Dazu passiert das Wasser/Aceton-Gemisch den Filter 10 und strömt dann über die Leitung 15 in den Absetzbehälter 16, in welchem es gekühlt wird, um Schwermetalle und andere in dem Wasser/Aceton-Gemisch schwer lösliche Salze auszufällen. Das von Salzen befreite Gemisch fließt über die Leitung 20 zum Destillationsbehälter 21, in welchem das Aceton über die Leitung 22 destillativ vom Wasser getrennt wird. Das Aceton gelangt dann in den Vorratsbehälter 29. Im bei der Destillation zurückbleibenden Wasser scheiden sich die ölartigen und andere in Wasser schwer oder unlösliche Verbindungen ab. Das Wasser gelangt dann über den Filter 27 in die Leitung 3.

Über die Leitungen 3 und 4 wird nun erneut Aceton und Wasser in die Zentrifuge 2 gegeben. Durch langsames Hin- und Herbewegen der Zentrifuge wird aus dem abgeschiedenen Holz 12 wieder eine Suspension gebildet, wobei die Holzteilchen unter Erwärmung nunmehr ein zweites Mal extrahiert werden. Nach dem Zentrifugieren wird das Wasser/Aceton-Gemisch wieder abgezogen und gereinigt, wie vorstehend geschildert. Es kann nun erneut der Zentrifuge 2 zur Bildung einer Holzsuspension bzw. zur Extraktion der in der Zentrifuge verbliebenen Holzteilchen zugeführt werden. Die Extraktion des Holzes 12 wird so oft wiederholt, bis es von giftigen Stoffen befreit ist. Alsdann wird das Holz 12 mit Wasser, das über den Anschluß 31 zugeführt wird, aus der Zentrifuge 2 gespült. Das über den Auslaß 6 mit Wasser ausgeschwemmte, gereinigte Holz kann über ein Siebbecken vom Wasser getrennt werden.

## Patentansprüche

1. Verfahren zum Entsorgen von mit giftigen anorganischen und organischen Stoffen behandeltem Holz, wobei eine erwärmte Suspension aus Wasser, einem wasserlöslichen organischen Lösungsmittel mit einem niedrigeren Siedepunkt als Wasser und dem zerkleinerten zu entsorgenden bzw. wiederzuverwendenden Holz in einer Zentrifuge zentrifugiert wird, das Gemisch aus Wasser und dem organischen Lösungsmittel aus der Zentrifuge abgezogen und gekühlt wird und dabei die darin enthaltenen schwer löslichen anorganischen Stoffe abgeschieden werden, und nach destillativer Trennung des organischen Lösungsmittels von dem Wasser, wobei bei dieser destillativen Trennung die giftigen organischen Stoffe als Destillationssumpf abgeschieden werden, das Wasser und das organische Lösungsmittel der Zentrifuge im Kreislauf zur erneuten Bildung einer Suspension aus Wasser, organischem Lösungsmittel und dem in der Zentrifuge abgeschiedenen Holz so oft wieder zugeführt wird, bis das Holz von den giftigen Stoffen befreit ist, und schließlich nach dem Abziehen des Gemischs aus Wasser und organischem Lösungsmittel das in der Zentrifuge abgeschiedene, von giftigen Stoffen befreite Holz aus der Zentrifuge ausgebracht wird.

2. Verfahren nach Anspruch 1, dadurch gekennzeichnet, daß das zerkleinerte Holz der Zentrifuge als Pulpe zugeführt wird.

3. Verfahren nach einem der vorstehenden Ansprüche, dadurch gekennzeichnet, daß das organische Lösungsmittel Aceton oder Alkohol ist.

4. Verfahren nach einem der vorstehenden Ansprüche, dadurch gekennzeichnet, daß zum Kühlen des Gemischs aus Wasser und organischem Lösungsmittel und zum Erwärmen des Gemischs aus Wasser und organischem Lösungsmittel zur destillativen Abtrennung des organischen Lösungsmittels eine Wärmepumpe verwendet wird.

5. Verfahren nach einem der vorstehenden Ansprüche, dadurch gekennzeichnet, daß das Gemisch aus Wasser und organischem Lösungsmittel nach dem Abziehen aus der Zentrifuge mit einem Filter filtriert wird.

6. Verfahren nach einem der vorstehenden Ansprüche, dadurch gekennzeichnet, daß das in der Zentrifuge abgeschiedene, von giftigen Stoffen befreite Holz durch Ausspülen mit Wasser ausgebracht wird.

7. Verfahren nach einem der vorstehenden Ansprüche, dadurch gekennzeichnet, daß die Suspension in der Zentrifuge unter Überdruck steht.

8. Anlage zur Durchführung des Verfahrens nach einem der vorstehenden Ansprüche mit einer eine Heizeinrichtung aufweisenden Zentrifuge (2) zum Zentrifugieren der Suspension aus Wasser, dem organischen Lösungsmittel und dem zerkleinerten Holz; einer Kühleinrichtung zur Kühlung des von der Zentrifuge abgezogenen Gemisches aus Wasser und organischem Lösungsmittel; einem Absetzbehälter (16) für das gekühlte, von der Zentrifuge (2) abgezogene Gemisch aus Wasser und organischem Lösungsmittel, zur Abscheidung von anorganischen Stoffen; einer Destillationseinrichtung (21) zum Abdestillieren des Lösungsmittels von dem Wasser und Abscheiden von organischen Stoffen im Wasser; und je einer Rücklaufleitung (3 bzw. 4) für das organische Lösungsmittel und für das Wasser von der Destillationseinrichutng (21) zur Zentrifuge (2).

9. Anlage nach Anspruch 8, dadurch gekennzeichnet, daß zur Kühlung des Gemischs aus Wasser und organischem Lösungsmittel und zum Erwärmen der Destillationseinrichtung und/oder der Suspension in der Zentrifuge (2) eine Wärmepumpe vorgesehen ist.

10. Anlage nach Anspruch 9, dadurch gekennzeichnet, daß die Wärmepumpe durch einen Verbrennungsmotor angetrieben wird, dessen Abwärme zum Erwärmen der Destillationseinrichtung und/oder der Suspension in der Zentrifuge (2) verwendet wird.

11. Anlage nach einem der Ansprüche 9 bis 10, dadurch gekennzeichnet, daß zwischen der Zentrifuge (2) und dem Absetzbehälter (16) ein Filter (10) in einer Filterkammer (8) vorgesehen ist.

12. Anlage nach Anspruch 11, dadurch gekennzeichnet, daß zur Reinigung des Filters (10) eine Leitung (13) vorgesehen ist, die stromaufwärts von dem Filter (10) an die Filterkammer (9) angeschlossen ist und im Kreislauf zur Zentrifuge (2) zurückführt.

## Claims

1. A method for disposing of wood treated with toxic inorganic and organic substances, whereby a heated suspension of water, a water-soluble organic solvent with a lower boiling point than water and the shredded wood to be disposed of or reused is centrifuged in a centrifuge, the mixture of water and the organic solvent removed from the centrifuge and cooled and the sparingly soluble inorganic substances contained therein thereby separated, and after the organic solvent is separated by distillation from the water, the toxic organic substances being separated as distillation bottoms during said separation by distillation, the water and organic solvent are refed to the centrifuge in the circuit for new formation of a suspension of water, organic solvent and the wood separated in the centrifuge until the wood is freed from the toxic substances, and finally after the mixture of water and organic solvent is removed the wood separated in the centrifuge and freed from toxic substances is discharged from the centrifuge.

2. The method of claim 1, characterized in that the shredded wood is fed to the centrifuge as pulp.

3. The method of one of the above claims, characterized in that the organic solvent is acetone or alcohol.

4. The method of one of the above claims, characterized in that a heat pump is used for cooling the mixture of water and organic solvent and for heating the mixture of water and organic solvent for the separation by distillation of the organic solvent.

5. The method of one of the above claims, characterized in that the mixture of water and organic solvent is filtered with a filter after removal from the centrifuge.

6. The method of one of the above claims, characterized in that the wood separated in the centrifuge and freed from toxic substances is discharged by flushing out with water.

7. The method of one of the above claims, characterized in that the suspension is pressurized in the centrifuge.

8. A plant for carrying out the method of one of the above claims having a centrifuge (2) with a heating device for centrifuging the suspension of water, the organic solvent and the shredded wood; a cooling device for cooling the mixture of water and organic solvent removed from the centrifuge; a settling tank (16) for the cooled mixture of water and organic solvent removed from the centrifuge (2), for separating inorganic substances; a distillation device (21) for distilling the solvent off the water and separating organic substances in the water; and return pipes (3, 4) for the organic solvent and the water, respectively, from the distillation device (21) to the centrifuge (2).

9. The plant of claim 8, characterized in that a heat pump is provided for cooling the mixture of water and organic solvent and for heating the distillation device and/or the suspension in the centrifuge (2).

10. The plant of claim 9, characterized in that the heat pump is driven by a combustion engine whose waste heat is used for heating the distillation device and/or the suspension in the centrifuge (2).

11. The plant of one of claims 9 to 10, characterized in that a filter (10) is provided in a filter chamber (8) between the centrifuge (2) and the settling tank (16).

12. The plant of claim 11, characterized in that a pipe (13) is provided for cleaning the filter (10), being connected to the filter chamber (9) upstream of the filter (10) and leading back in the circuit to the centrifuge (2).

## Revendications

1. Procédé d'élimination de bois traité avec des matières inorganiques et organiques toxiques, dans lequel une suspension chauffée constituée par de l'eau, un solvant organique soluble à l'eau, dont le point d'ébullition est inférieur à celui de l'eau, et par le bois broyé à éliminer ou à récupérer est centrifugée dans une centrifuge, le mélange d'eau et de solvant organique étant soutiré de la centrifuge et refroidi, et les substances organiques difficilement solubles qui y sont contenues en étant séparées et, après séparation du solvant organique de l'eau par distillation, au cours de laquelle les substances organiques toxiques sont séparées sous forme de résidu de destillation, l'eau et le solvant organique sont mis aussi souvent en circuit dans la centrifuge pour former de nouveau une suspension constituée par de l'eau, un solvant organique et par le bois séparé dans la centrifuge, jusqu'à ce que le bois soit délivré des substances toxiques, et, après avoir soutiré le mélange d'eau et de solvant organique, le bois délivré des substances toxiques et séparé dans la centrifuge, est enfin extrait de la centrifuge.

2. Procédé selon la revendication 1, caractérisé en ce que le bois broyé est amené à la centrifuge sous forme de pulpe.

3. Procédé selon l'une quelconque des revendications précédentes, caractérisé en ce que le solvant organique est de l'acétone ou de l'alcool.

4. Procédé selon l'une quelconque des revendications précédentes, caractérisé en ce qu'on utilise une thermopompe pour refroidir le mélange d'eau et de solvant organique et pour chauffer le mélange d'eau et de solvant organique pour séparer le solvant organique par distillation.

5. Procédé selon l'une quelconque des revendications précédentes, caractérisé en ce que le mélange d'eau et de solvant organique est filtré à l'aide d'un filtre après avoir été soutiré de la centrifuge.

6. Procédé selon l'une quelconque des revendications précédentes, caractérisé en ce que le bois séparé dans la centrifuge et libéré des substances toxiques est extrait par rinçage à l'eau.

7. Procédé selon l'une quelconque des revendications précédentes, caractérisé en ce que la suspension dans la centrifuge est sous surpression.

8. Installation pour réaliser le procédé selon l'une quelconque des revendications précédentes, comportant une centrifuge (2) présentant un dispositif de chauffage, pour centrifuger la suspension d'eau, de solvant organique et de bois broyé; un dispositif de refroidissement pour refroidir le mélange d'eau et de solvant organique soutiré de la centrifuge; un récipient de décantation (16) pour le mélange d'eau et de solvant organique refroidi et soutiré de la centrifuge (2) afin de le séparer des substances inorganiques; un dispositif de distillation (21) pour distiller le solvant de l'eau et séparer les substances organiques se trouvant dans l'eau; et une conduite de retour respective (3 et 4) pour ramener le solvant organique et l'eau du dispositif de distillation (21) à la centrifuge (2).

9. Installation selon la revendication 8, caractérisée en ce qu'il est prévu une thermopompe pour refroidir le mélange d'eau et de solvant organique et pour chauffer le dispositif de distillation et/ou la suspension dans la centrifuge (2).

10. Installation selon la revendication 9, caractérisée en ce que la thermopompe est entraînée par un moteur à combustion, dont la chaleur perdue est utilisée pour chauffer le dispositif de distillation et/ou la suspension dans la centrifuge (2).

11. Installation selon l'une ou l'autre des revendication 9 et 10, caractérisée en ce qu'il est prévu un filtre (10) dans une chambre de filtre (8) entre la centrifuge (2) et le récipient de décantation (16).

12. Installation selon la revendication 11, caractérisée en ce qu'il est prévu pour le nettoyage du filtre (10) une conduite (13) qui est raccordée à la chambre de filtre (9) en amont du filtre (10) et qui reconduit au circuit vers la centrifuge (2).
